(19) Europäisches Patentamt
European Patent Office
Office européen des brevets

(11) Veröffentlichungsnummer: **0 002 539**
**B1**

# (12) EUROPÄISCHE PATENTSCHRIFT

(45) Veröffentlichungstag der Patentschrift: **22.07.81**

(51) Int. Cl.³: **C 08 J 9/22**, C 08 L 25/04

(21) Anmeldenummer: **78101755.3**

(22) Anmeldetag: **19.12.78**

## (54) Selbstverlöschende, expandierbare Styrolpolymerisate und deren Verwendung zur Herstellung von Schaumstoffen.

(30) Priorität: **21.12.77 DE 2757020**

(43) Veröffentlichungstag der Anmeldung: **27.06.79 Patentblatt 79/13**

(45) Bekanntmachung des Hinweises auf die Patenterteilung: **22.07.81 Patentblatt 81/29**

(84) Benannte Vertragsstaaten: **BE CH DE FR GB IT NL SE**

(56) Entgegenhaltungen:
**DE-A-2 128 680**
**DE-A-2 458 483**
**DE-A-2 655 808**
**DE-A-2 723 211**
**GB-A-1 199 591**
**US-A-3 639 302**
**CHEMICAL ABSTRACTS, vol. 88, 1978, page 43, ref. 171 082 z, columbus, Ohio, USA »Light stabilizers for polystyrene containing fireproofing agents«**
**ENCYCLOPEDIA OF POLYMER SCIENCE AND TECHNOLOGY, vol. 14, 1971, New York G. R. LAPPIN: »Ultraviolet-Radiation Absorbers«, Seiten 125—148**

(73) Patentinhaber: **BASF Aktiengesellschaft, Carl-Bosch-Strasse 38, D-6700 Ludwigshafen (DE)**

(72) Erfinder: **Hahn, Klaus, Dr., Burggasse 2, D-6840 Lampertheim (DE)**
Erfinder: **Walter, Manfred, Dr., Hans-Purrmann-Allee 18, D-6720 Speyer (DE)**
Erfinder: **Stange, Karl, Dr., Im Kaestenbusch 12, D-6730 Neustadt 19 (DE)**
Erfinder: **Weber, Heinz, Dr., Am Wehrhaus 26, D-6718 Gruenstadt 1 (DE)**

**EP 0 002 539 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Selbstverlöschende, expandierbare Styrolpolymerisate und deren Verwendung zur Herstellung von Schaumstoffen

Expandierbares Polystyrol, welches zu Schaumkunststoffen verarbeitet werden kann, wird üblicherweise mit Bromverbindungen selbstverlöschend ausgerüstet. Besonders wirksame Bromverbindungen sind solche, die im Molekül C=C- oder C=N-Doppelbindungen aufweisen, durch welche die Bromatome aktiviert werden. Beispiele für derartige Bromverbindungen sind 2,5-Bis-(tribrommethyl)-1,3,5-thiadiazol (DE-OS 25 45 223), 2,4,6-Tris-(tribrommethyl)-1,3,5-triazin, Pentabromphenylallyläther (GB-PS 1 142 298) und Hexabrombuten-2 (DE-OS 24 58 483).

Flammschutzmittel werden den Styrolpolymerisaten meist schon bei deren Herstellung zugesetzt, d. h., man polymerisiert Styrol in Gegenwart der Bromverbindung. Dabei können vor allem bei den genannten hochwirksamen Bromverbindungen Reglereffekte auftreten, welche die Eigenschaften der Styrolpolymerisate nachteilig beeinflussen. In diesem Fall ist es dann günstiger, die Bromverbindung oberflächlich auf das expandierbare, teilchenförmige Styrolpolymerisat aufzubringen. Mit dieser Arbeitsweise befaßt sich die DE-OS 26 25 808.

Auch in der US-PS 3 639 302 und in der GB-PS 1 199 591 ist das Beschichten von treibmittelhaltigen Polystyrolteilchen mit organischen Bromverbindungen beschrieben.

Es hat sich nun gezeigt, daß Schaumstoffe, die aus derart mit Flammschutzmitteln beschichteten Styrolpolymerisaten hergestellt wurden, bei der Freibewitterung — vermutlich infolge Lichteinwirkung — zu einem Polymerabbau und zu einem Abbau der Verschweißung der einzelnen Schaumpartikel miteinander neigen. Der Erfindung lag daher die Aufgabe zugrunde, die beschichteten Styrolpolymerisate dagegen zu stabilisieren.

Es wurde gefunden, daß dies besonders günstig durch Beschichten der Styrolpolymerisate mit einem N-Hydroxyphenylbenzotriazol oder mit einem Hydroxybenzoephenon geschehen kann.

Gegenstand der Erfindung sind demzufolge teilchenförmige, selbstverlöschende thermoplastische Formmassen auf Basis von Treibmittel enthaltenden Styrolpolymerisaten, die oberflächlich mit 0,05 bis 2 Gewichtsprozent, bezogen auf das treibmittelhaltige Styrolpolymerisat, einer organischen Bromverbindung A beschichtet sind und in der Beschichtung zusätzlich 0,005 bis 1,0 Gewichtsprozent eines N-Hydroxyphenylbenzotriazols oder Hydroxybenzophenons der anspruchsgemäßen Formeln als Stabilisator enthalten.

Vorzugsweise enthalten sie darüber hinaus noch mindestens eine weiteren Stabilisator aus der Gruppe:

C. 0,001 bis 1,0 Gewichtsprozent eines sterisch gehinderten Phenols und
D. 0,001 bis 0,5 Gewichtsprozent eines Dialkylzinndicarboxylats.

Besonders günstig ist es, wenn die Styrolpolymerisate mit beiden der weiteren Stabilisatoren C und D beschichtet sind.

Aus Chemical Abstracts, Vol. 88, 1978, Seite 43, Referat 171 082 z, ist bekannt, daß Polystyrol gegen Licht und Hitze durch N-Hydroxyphenylbenzotriazole stabilisiert werden kann. Das Polystyrol enthält als Flammschutzmittel verhältnismäßig große Mengen einer halogenierten aromatischen Verbindung, zusammen mit Antimontrioxid. Die Zusatzstoffe werden durch Extrusion in das Polystyrol eingearbeitet. Auch die Lichtstabilisierung von Polystyrol durch Hydroxybenzophenone ist aus »Encyclopedia of Polymer Science and Technology«, Vol. 14, 1971, Seite 143, bekannt. Bei einer solchen Stabilisierung von Kunststoffen gegen Lichteinwirkung werden die pulverförmigen Stabilisatoren gewöhnlich in die Polymerschmelze eingearbeitet. Dort erfolgt eine molekulare Zerteilung der Stabilisatorteilchen, so daß eine homogene Lösung entsteht. Im Gegensatz dazu soll erfindungsgemäß nicht das Polystyrol, sondern die Bromverbindung, die in geringen Mengen als Beschichtung auf den Polystyrol-Teilchen aufgebracht ist, stabilisiert werden. Zu diesem Zweck werden auch die Stabilisatoren oberflächlich auf die Polystyrol-Teilchen aufgebracht. Dabei sind sie weder mit dem Polystyrol noch mit der Bromverbindung homogen vermischt. Es war nun sehr überraschend, daß auch hier eine Stabilisatorwirkung auftritt, wo nicht eine homogene molekulare Verteilung des Stabilisators in zu stabilisierendem Material vorliegt, sondern wo die Stabilisatoren mit der zu stabilisierenden Bromverbindung lediglich als Pulver mechanisch vermischt sind.

Als Styrolpolymerisate kommen Polystyrol und Mischpolymerisate des Styrols mit bis zu 50 Gewichtsprozent an Comonomeren in Frage. Comonomere können z. B. α-Methylstyrol, Acrylnitril sowie Ester der Acryl- oder Methacrylsäure von Alkoholen mit 1 bis 8 Kohlenstoffatomen sein. In Betracht kommen auch schlagzäh modifizierte Styrolpolymerisate, die durch Polymerisation von Styrol, gegebenenfalls zusammen mit Acrylnitril, in Gegenwart kautschukartiger Butadien-Polymerisate hergestellt wurden. Die Formmassen enthalten als Treibmittel vorzugsweise flüssige oder gasförmige, organische Verbindungen, die das Polymerisat nicht lösen und deren Siedepunkt unterhalb des Erweichungspunktes des Polymerisats liegt, z. B. aliphatische oder cycloaliphatische Kohlenwasserstoffe, wie Propan, Butan, Pentan, Hexan, Heptan, Cyclohexan, oder Halogenwasserstoffe, wie Methylchlorid, Dichlordifluormethan oder 1,2,2-Trifluor-1,1,2-trichloräthan. Es ist vorteilhaft, 3 bis 10 Gewichtsprozent, bezogen auf das Styrolpolymerisat, an Treibmittel zu verwenden.

Bezüglich weiterer Einzelheiten sei auf das Kunststoffhandbuch, Band V, »Polystyrol«, Carl-Hanser-Verlag, Kapitel 6, »Polystyrol-Schaumstoffe«, verwiesen.

Die Formmassen liegen in Teilchenform vor, wobei die Teilchengröße vorteilhaft 0,1 bis 6,0 mm, insbesondere 0,4 bis 3 mm beträgt. Die organischen Bromverbindungen werden als feine Pulver in Mengen von 0,05 bis 2, insbesondere 0,1 bis 1 Gewichtsprozent, bezogen auf die treibmittelhaltigen Styrolpolymerisate, zusammen mit den Stabilisatoren, oberflächlich auf die Teilchen aufgebracht, vorzugsweise durch einfaches Auftrommeln. In manchen Fällen kann es zweckmäßig sein, die expandierbaren Teilchen zusätzlich noch mit üblichen Mitteln zur Verkürzung der Entformzeit zu beschichten, beispielsweise mit Glycerinmonostearat oder mit Urethanen.

Um ein Verbacken oder Verkleben der beschichteten Teilchen bei der Weiterverarbeitung zu verhindern, ist es vorteilhaft, zusätzlich noch Antiverklebungsmittel auf die Teilchen aufzubringen. Besonders geeignet dafür ist feinteilige Kieselsäure, die vorzugsweise in Mengen von 0,005 bis 0,1 Gewichtsprozent, bezogen auf die treibmittelhaltigen Styrolpolymerisate, eingesetzt wird. Kieselsäure hat den Vorteil, daß sie die flammhemmende Wirkung der organischen Bromverbindungen nicht nachteilig beeinflußt. Man kann jedoch grundsätzlich auch andere bekannte Antiverklebemittel einsetzen, z. B. Zinstearat. Ebenfalls als Antiverklebemittel geeignet ist Calciumcarbonat. Es hat sich darüber hinaus gezeigt, daß diese Verbindung sowie auch andere Salze, Oxide und Hydroxide von Edalkalimetallen die durch die Bromverbindungen verursachte Korrosion an Verarbeitungsmaschinen verhindern. In einer bevorzugten Ausführungsform werden daher zusammen mit den erfindungsgemäßen Flammschutzmitteln und Stabilisatoren 0,001 bis 0,2 Gewichtsprozent Erdalkalisalze, -oxide oder -hydroxide auf die Styrolpolymerisate aufgebracht. Besonders bevorzugt sind Calciumcarbonat, Calciumphosphat, Calciumstearat, Calciumoxid, Magnesiumcarbonat und Magnesiumoxid.

Als Flammschutzmittel A kommen bevorzugt solche Bromverbindungen in Frage, die mindestens 50 Prozent Brom enthalten und im Molekül mindestens eine C=C- oder C=N-Doppelbindung aufweisen. Besonders bevorzugt sind:

2,5-Bis-(tribrommethyl)-1,3,4-thiadiazol

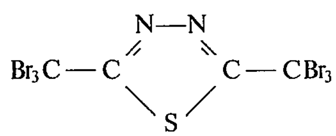

(A₁)

1,1,2,3,4,4-Hexabromtuten-2

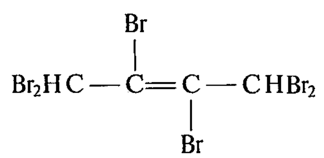

(A₂)

Pentabromphenylallyläther

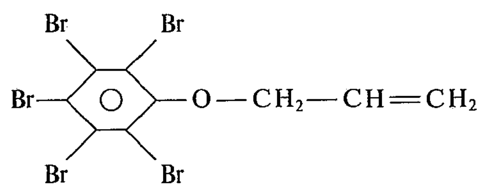

(A₃)

2,4,6-Tris-(tribrommethyl)-1,3,5-triazin

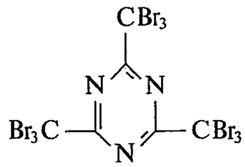

(A₄)

In manchen Fällen kann die Flammschutzwirkung noch durch Zugabe eines synergistisch wirkenden Peroxids, z. B. Dicumylperoxid, in Mengen von 0,1 bis 1,0 Gewichtsprozent, verstärkt werden.

Erfindungsgemäß verwendbare Stabilisatoren B sind substituierte N-Hydroxyphenylbenzotriazole der allgemeinen Formel

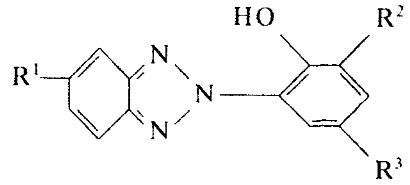

worin $R^1$ Wasserstoff, Chlor oder ein Alkylrest mit 1 bis 4 Kohlenstoffatomen, und $R^2$ und $R^3$ Wasserstoff oder Alkylrest mit 1 bis 6 Kohlenstoffatomen bedeuten. Bevorzugt sind:

2-(2-Hydroxy-3,5-di-tert.-butylphenyl)-5-chlorbenzotriazol ($B_1$),
2-(2-Hydroxy-3,5-di-tert.-amylphenyl)-benzotriazol ($B_2$),
2-(2-Hydroxy-5-methylphenyl)-benzotriazol ($B_3$) und
2-(2-Hydroxy-3-tert.-butyl-5-methylphenyl)-5-chlorbenzotriazol ($B_4$).

Weitere erfindungsgemäß verwendbare Stabilisatoren B sind substituierte Hydroxybenzophenone der Formel

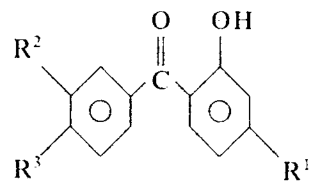

wobei $R^1$, $R^2$ und $R^3$ Wasserstoffatome, Alkyl- oder Alkoxyreste sind.

Als sterisch gehinderte Phenole C kommen in Frage insbesondere solche der allgemeinen Formel

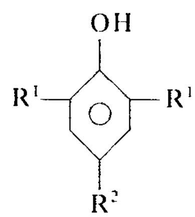

in der $R^1$ Alkylreste mit 1 bis 6 Kohlenstoffatomen, vorzugsweise tert.-Butyl, darstellen und $R^2$ ebenfalls einen Alkylrest mit 1 bis 6 Kohlenstoffatomen oder ein Esterrest ist, z. B. $-CH_2-CH_2COOR^3$ (mit $R^3$ = Alkyl- oder Arylrest mit 1 bis 20 Kohlenstoffatomen). Bevorzugt ist 1,6-Hexandiol-bis-3-(3,5-di-tert.-butyl-4-hydroxyphenyl)-propionat ($C_1$).

Die Komponente D ist vorzugsweise Dibutylzinndilaurat ($D_1$).

Bei den Formmassen soll die Anwesenheit anderer, bekannter Flammschutzmittel nicht ausgeschlossen sein. Die Formmassen können noch weitere Komponenten, z. B. Füllstoffe, Farbpigmente, Gleitmittel, Antistatika, Alterungsschutzmittel oder solche Verbindungen, welche die Schaumbildung fördern.

Die erfindungsgemäßen Formmassen können zur Herstellung von selbstverlöschenden Schaumstoffen mit einem Raumgewicht von 5 bis 100, vorzugsweise 10 bis 50 g/l verwendet werden. Das Aufschäumen geschieht durch Expansion der Treibmittel bei erhöhten Temperaturen, z. B. durch Versintern in Formen oder durch Strangpressen.

Die in den Beispielen genannten Teile beziehen sich auf 100 Gewichtsteile treibmittelhaltiges Polystyrol.

## Beispiel

Ein expandierbares Polystyrol mit einem Gehalt von 6,4 Gewichtsprozent n-Pentan und einem mittleren Teilchendurchmesser von 1,5 mm wurde durch Auftrommeln im Schaufelmischer mit verschiedenen Mischungen aus Flammschutzmitteln und Stabilisatoren jeweils 3 Minuten lang beschichtet. In allen Versuchen enthielt die Mischung 0,4 Teile Glyzerinmonostearat sowie gegebenenfalls als Antiverklebungsmittel Kieselsäure mit einer mittleren Teilchengröße von 12 µm ($SiO_2$) oder Calciumcarbonat ($CaCO_3$).

Durch Einwirkung von Wasserdampf wurden die expandierbaren beschichteten Polystyrol-Teilchen geschäumt und nach eintägiger Lagerung durch weitere Behandlung mit Wasserdampf in einer Dampfkammer zu Schaumstoffblöcken verschweißt. Aus diesen wurden mit einem elektrisch beheizten Draht Schaumstoff-Streifen von 0,2 × 6 × 20 cm herausgeschnitten. An diesen wurde sowohl

durch Freibewitterung als auch durch Bestrahlung mit einem Flachbelichter die Wirksamkeit des Stabilisatorsystems geprüft.

Bei dem Freibewitterungstest zeigte sich nach 4 Wochen (im Sommer) bei den unstabilisierten Proben an der Oberfläche eine Zerstörung der Verschweißung der Einzelpartikel sowie eine starke Vergilbung des Schaumstoffs, während bei den erfindungsgemäß stabilisierten Proben nach 4 Wochen noch keine Schädigung zu erkennen war. Beim Bestrahlungstest wurden die Proben jeweils 70 Stunden lang mit einer Fluoreszenzlampe (Wellenlängenbereich ca. 300 bis 350 $\mu m$) bestrahlt und dann die Viskositätszahl als Maß für den Polymerabbau des Polystyrols nach DIN 53 725 gemessen.

Die Tabelle zeigt verschiedene Mischungen, mit denen die Polystyrol-Teilchen beschichtet worden waren, sowie die gemessenen Viskositätszahlen.

Die Versuche 1 und 2 sind Vergleichsversuche.

Tabelle

| Versuch | Flammschutzmittel | | Stabilisator | | Antiverklebmittel | | Viskositätszahl |
|---|---|---|---|---|---|---|---|
| | Teile | Art | Teile | Art | Teile | Art | $[cm^3/g]$ |
| 1 | – | – | – | – | – | – | 76,4 |
| 2 | 0,3 | $A_1$ | – | – | 0,03 | $CaCO_3$ | 59,3 |
| 3 | 0,3 | $A_1$ | 0,15<br>0,15 | $B_1$<br>$B_1$ | 0,03 | $CaCO_3$ | 68,0 |
| 4 | 0,3 | $A_1$ | 0,15 | $B_1$ | 0,03 | $CaCO_3$ | 69,5 |
| 5 | 0,3 | $A_1$ | 0,03<br>0,02<br>0,1 | C<br>D<br>$B_1$ | 0,03 | $CaCO_3$ | 71,1 |
| 6 | 0,2 | $A_1$ | 0,02<br>0,016 | C<br>D | 0,02 | $CaCO_3$ | 74,0 |
| 7 | 0,3 | $A_1$ | 0,3 | $B_2$ | 0,025 | $SiO_2$ | 70,0 |
| 8 | 0,3 | $A_1$ | 0,15<br>0,15 | $B_2$<br>$B_2$ | 0,025 | $SiO_2$ | 65,0 |
| 9 | 0,3 | $A_1$ | 0,15 | $B_3$ | 0,025 | $SiO_2$ | 70,1 |
| 10 | 0,3 | $A_1$ | 0,03 | C | 0,03 | $CaCO_3$ | 64,0 |
| 11 | 0,3 | $A_1$ | 0,15<br>0,15 | $B_4$<br>$B_4$ | 0,03 | $CaCO_3$ | 64,6 |
| 12 | 0,3 | $A_1$ | 0,03 | C | 0,03 | $CaCO_3$ | 66,2 |
| 13 | 0,3 | $A_1$ | 0,15<br>0,25 | $B_5$<br>$B_1$ | 0,03 | $CaCO_3$ | 63,8 |
| 14 | 0,5 | $A_2$ | 0,05<br>0,04<br>0,4 | C<br>D<br>$B_1$ | 0,03 | $CaCO_3$ | 75,8 |
| 15 | 0,8 | $A_3$ | 0,08<br>0,064<br>0,15 | C<br>D<br>$B_1$ | 0,03 | $CaCO_3$ | 71,6 |
| 16 | 0,3 | $A_4$ | 0,03<br>0,024 | C<br>D | 0,03 | $CaCO_3$ | 69,1 |

**Patentansprüche**

1. Teilchenförmige, selbstverlöschende, thermoplastische Formmassen auf Basis von flüchtige Treibmittel enthaltenden Styrolpolymerisaten, die oberflächlich mit 0,05 bis 2,0 Gew.-%, bezogen auf das treibmittelhaltige Styrolpolymerisat, einer organischen Bromverbindung A beschichtet sind, dadurch gekennzeichnet, daß sie in der Beschichtung zusätzlich 0,005 bis 1,0 Gew.-% eines substituierten N-Hydroxyphenylbenzotriazols der Formel

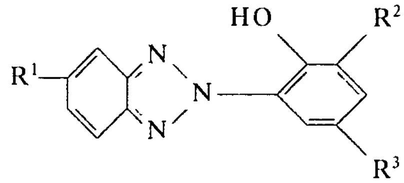

worin $R^1$ Wasserstoff, Chlor oder ein Alkylrest mit 1 bis 4 Kohlenstoffatomen, und $R^2$ und $R^3$ Wasserstoff oder Alkylreste mit 1 bis 6 Kohlenstoffatomen bedeuten, oder eines substituierten Hydroxybenzophenons der Formel

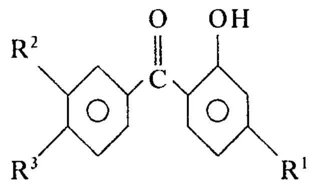

wobei $R^1$, $R^2$ und $R^3$ Wasserstoffatome, Alkyl- oder Alkoxyreste sind, als Stabilisator B enthalten.

2. Formmassen nach Anspruch 1, dadurch gekennzeichnet, daß sie in der Beschichtung zusätzlich zu A und B noch mindestens einen der folgenden weiteren Stabilisatoren enthalten:

C. 0,001 bis 1,0 Gewichtsprozent eines sterisch gehinderten Phenols,
D. 0,001 bis 0,5 Gewichtsprozent eines Dialkylzinndicarboxylats.

3. Formmassen nach den Ansprüchen 1 und 2, dadurch gekennzeichnet, daß sie in der Beschichtung zusätzlich zu der organischen Bromverbindung und den Stabilisatoren noch 0,005 bis 0,1 Gewichtsprozent feinteiliger Kieselsäure und/oder 0,001 bis 0,2 Gewichtsprozent eines Erdalkalisalzes, -oxids oder -hydroxids enthalten.

4. Formmassen nach Anspruch 1, dadurch gekennzeichnet, daß die organische Bromverbindung A mindestens 50% Brom enthält und mindestens eine C=C- oder eine C=N-Doppelbindung im Molekül aufweist.

5. Formmassen nach Anspruch 1, dadurch gekennzeichnet, daß die organische Bromverbindung A

2,5-Bis-(tribrommethyl)-1,3,4-thiadiazol,
1,1,2,3,4,4-Hexabrombuten-2,
Pentabromphenylallyläther oder
2,4,6-Tris-(tribrommethyl)-1,3,5-triazin ist.

6. Formmassen nach Anspruch 1, dadurch gekennzeichnet, daß sie als Stabilisator C ein sterisch gehindertes Phenol der Formel

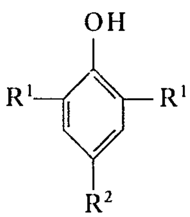

in der $R^1$ Alkylreste mit 1 bis 6 Kohlenstoffatomen darstellen, und $R^2$ ein Alkylrest mit 1 bis 6 Kohlenstoffatomen oder ein Esterrest $-CH_2-CH_2-COOR^3$ (mit $R^3$ = Alkyl- oder Arylrest mit 1 bis 20 Kohlenstoffatomen) ist, enthalten.

7. Formmasse nach Anspruch 1, dadurch gekennzeichnet, daß der Stabilisator D Dibutylzinndilaurat ist.

8. Verwendung der Formmassen nach Anspruch 1 zur Herstellung von selbstverlöschenden Schaumstoffen durch Expansion der Treibmittel bei erhöhten Temperaturen.

## Claims

1. A particulare, self-extinguishing, thermoplastic molding composition based on a styrene polymer, containing volatile blowing agents, which is surface-coated with from 0.05 to 2.0 percent by weight, based on the styrene polymer containing blowing agents, of an organic bromine compound A, characterized in that it additionally contains in the coating from 0.005 to 1.0 percent by weight of a substituted N-hydroxyphenylbenzotriazole of the formula

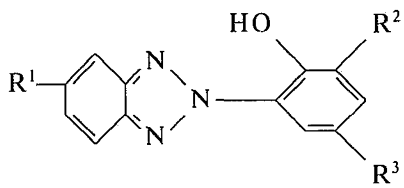

where $R^1$ is hydrogen, chlorine or alkyl of 1 to 4 carbon atoms, and $R^2$ and $R^3$ are hydrogen or alkyl of 1 to 6 carbon atoms, or of a substituted hydroxybenzophenone of the formula

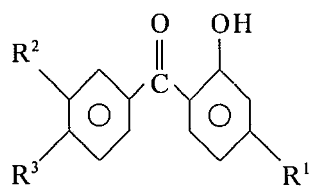

where $R^1$, $R^2$ and $R^3$ are hydrogen, alkyl or alkoxy, as stabilizer B.

2. A molding composition as claimed in claim 1, characterized in that it contains in the coating in addition to A and B at least one of the following further stabilizers:

C. from 0.001 to 1.0 percent by weight of a sterically hindered phenol, and
D. from 0.001 to 0.5 percent by weight of a dialkyl-tin dicarboxylate.

3. A molding composition as claimed in claims 1 and 2, characterized in that it contains in the coating in addition to the organic bromine compound and the stabilizers from 0.005 to 0.1 percent by weight of finely divided silica and/or from 0.001 to 0.2 percent by weight of an alkaline earth metal salt, oxide or hydroxide.

4. A molding composition as claimed in claim 1, characterized in that the organic bromine compound A contains at least 50% of bromine and has at least one C=C or one C=N double bond in the molecule.

5. A molding composition as claimed in claim 1, characterized in that the organic bromine compound A is

2,5-bis-(tribromomethyl)-1,3,4-thiadiazole,
1,1,2,3,4,4-hexabromobut-2-ene,
pentabromophenyl allyl ether or
2,4,6-tris-(tribromomethyl)-1,3,5-triazine.

6. A molding composition as claimed in claim 1, characterized in that it contains as stabilizer C a sterically hindered phenol of the formula

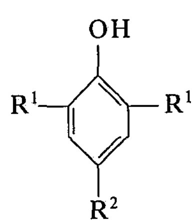

where $R^1$ is alkyl of 1 to 6 carbon atoms, and $R^2$ is alkyl of 1 to 6 carbon atoms or an ester radical $-CH_2-CH_2-COOR^3$ (where $R^3$ is alkyl or aryl of 1 to 20 carbon atoms).

7. A molding composition as claimed in claim 1, characterized in that the stabilizer D is dibutyl-tin dilaurate.

8. Use of the molding composition as claimed in claim 1 for the manufacture of self-extinguishing foams by expansion of the blowing agents at elevated temperatures.

**Revendications**

1. Matières à mouler thermoplastiques auto-extinguibles en particules, à base de polymères du styrène renfermant des agents porogènes et comportant un enrobage superficiel de 0,05 à 2,0% en poids, par rapport au polymère styrénique renfermant un agent porogène, d'un composé organique bromé A, caractérisé en ce que l'enduit contient en outre, en tant que stabilisant B, entre 0,005 et 1,0% en poids d'un N-hydroxyphényl-benzotriazole substitué de la formule

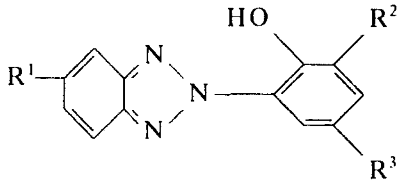

dans laquelle $R^1$ désigne un atome d'hydrogène ou de chlore ou un radical alcoyle en $C_1$ à $C_4$ et $R^2$ et $R^3$ représentent chacun un atome d'hydrogène ou un radical alcoyle en $C_1$ à $C_6$, ou d'une hydroxy-benzophénone de la formule

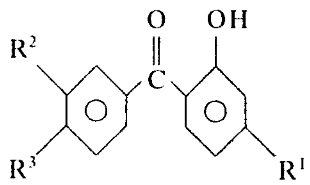

dans laquelle $R^1$, $R^2$ et $R^3$ représentent des atomes d'hydrogène, des radicaux alcoyle ou des groupes alcoxy.

2. Matières à mouler suivant la revendication 1, caractérisées en ce que l'enduit contient, à côté de A et de B, au moins un autre stabilisant choisi parmi:

C. 0,001 à 1,0% en poids d'un phénol stériquement empêché;
D. 0,001 à 0,5% en poids d'un dicarboxylate de dialcoylétain.

3. Matières à mouler suivant l'une des revendications 1 et 2, caractérisées en ce que l'enrobage contient, à côté du composé organique bromé et des stabilisants, entre 0,005 et 0,1% en poids d'acide silicique finement divisé et (ou) 0,001 à 0,2% en poids d'un sel, oxyde ou hydroxyde d'un métal alcalino-terreux.

4. Matières à mouler suivant la revendication 1, caractérisées en ce que le composé organique bromé A contient au moins 50% de brome et au moins une double liaison $-C=C-$ ou $-C=N-$dans sa molécule.

5. Matières à mouler suivant la revendication 1, caractérisées en ce que le composé organique bromé A est choisi parmi

le 2,5-bis-(tribromométhyl)-1,3,4-thiadiazole,
le 1,1,2,3,4,4-hexabromo-butène-2,
l'éther pentabromo-phényl-allylique et
la 2,4,6-tris-(tribromométhyl)-1,3,5-triazine.

6. Matières à mouler suivant la revendication 1, caractérisées en ce que le stabilisant C est un phénol stériquement empêché de la formule

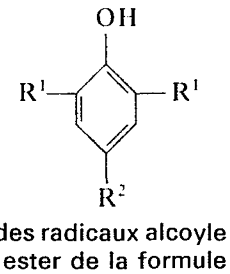

dans laquelle les symboles $R^1$ désignent des radicaux alcoyle en $C_1$ à $C_6$ et le symbole $R^2$ représente un radical alcoyle en $C_1$ à $C_6$ ou un groupe ester de la formule $-CH_2-CH_2-COOR^3$, où $R^3$ désigne un groupe alcoyle ou aryle en $C_1$ à $C_{20}$.

7. Matière à mouler suivant la revendication 1, caractérisée en ce que le stabilisant D est du dilaurate de dibutyl-étain.

8. Utilisation des matières à mouler suivant la revendication 1 pour la préparation de mousses auto-extinguibles par expansion de l'agent porogène à température accrue.